# EUROPÄISCHE PATENTSCHRIFT

(11) **EP 1 814 266 B1**
(45) Veröffentlichungstag und Bekanntmachung des Hinweises auf die Patenterteilung: **26.03.2014**
(21) Anmeldenummer: 07001438.6
(22) Anmeldetag: 24.01.2007
(51) Int. Cl.: H04L 12/437

(54) **Redundantes Kommunikationsnetzwerk**
Redundant communications network
Réseau de communication redondant

(30) Priorität: 30.01.2006 DE 102006004339
(43) Veröffentlichungstag der Anmeldung: 01.08.2007
(60) Teilanmeldung: 09006695.2
(73) Patentinhaber: ROBERT BOSCH GMBH, 70469 Stuttgart (DE)
(72) Erfinder: Schultze, Stephan, Dr., 97816 Lohr am Main (DE); Tchekler, Alexander, 97845 Neustadt (DE); Ackermann, Roland, 97816 Lohr am Main (DE); Noak, Gerald, 97816 Lohr am Main (DE)

(56) Entgegenhaltungen:
- EP-A- 1 193 916
- EP-A- 1 434 393
- WO-A-03/073704
- DE-A1- 19 810 587
- US-A1- 2004 223 503
- US-B1- 6 766 482
- INTERESSENSGEMEINSCHAFT SERCOS INTERFACE E V: "SERCOS-III (Dritte Generation SERCOS interface)" INTERNET CITATION, [Online] April 2004 (2004-04), XP002356906 Gefunden im Internet: URL:http://www.sercos.de/pdf/SERCOS-III_V1 34d_public.pdf> [gefunden am 2005-12-01]

## Beschreibung

Die Erfindung befasst sich mit einem Verfahren zum Betreiben eines redundanten, ringförmigen Kommunikationsnetzwerkes sowie mit einem Kommunikationsnetzwerk, welches sich dieses Verfahrens bedient.

Aus dem Stand der Technik sind ringförmige Kommunikationssysteme mit Redundanzfunktion, die einen Hauptteilnehmer ("Master") und Nebenteilnehmer ("Slaves") umfassen, bekannt. Derartige Kommunikationssysteme sind bspw. in der WO 03/073704 A1 oder der US 2004/223503 A1 offenbart.

Die deutsche Patentanmeldung mit dem Aktenzeichen DE 10 2004 041 093 beschreibt ein solches ringförmiges Kommunikationssystem in Figur 1a, welches beispielsweise ein Steuerungs- und Antriebssysteme für wellenlose Produktionsmaschinen darstellen könnte. Derartige Systeme nutzen einen so genannten gegenläufigen Doppelring zur Kommunikation. Im Redundanzfalle (Fehlerfalle) zerfällt der Doppelring in zwei Linientopologien. Eine Kommunikation zwischen Nebenstationen, die nicht von der Störung betroffen sind, erfolgt dann ausschließlich durch das Umkopieren aller von Nebenteilnehmern gesendeten Daten über die Hauptstation. Dies erhöht die Auslastung der Hauptstation erheblich und verursacht Laufzeitverzögerungen zwischen unmittelbar benachbarten Nebenteilnehmern.

Die Aufgabe der Erfindung besteht darin, eine Datenübertragung im Fehlerfalle sicher zu stellen, den Hauptteilnehmer bestmöglich zu entlasten und Laufzeitverzögerungen zwischen Nebenteilnehmern weitestgehend zu vermeiden.

Gelöst wird die Aufgabe mittels eines Verfahrens zum Betreiben eines redundanten, ringförmigen, insbesondere gegenläufig kommunizierenden, Kommunikationsnetzwerkes mit zumindest einem Hauptteilnehmer und zumindest zwei Nebenteilnehmern, welche mittels einer Datenübertragungseinrichtung, miteinander kommunizieren, wobei die Datenübertragung auf einer Feldbusnorm basiert. Die Nebenteilnehmer kommunizieren unmittelbar mittels der Datenübertragungseinrichtung miteinander kommunizieren und/oder mittelbar mittels des Hauptteilnehmers und der Datenübertragungseinrichtung miteinander, indem der Hauptteilnehmer sie zwischen den Nebenteilnehmern auszutauschenden Daten zwischen seinen Datenübertragungseinrichtungsanschlüssen nach Maßgabe eines Übertragungstaktes austauscht.

Die Datenübertragungseinrichtung könnte beispielsweise mittels einer leitungs-oder funkgebundenen Datenübertragung realisiert sein, welche eine bidirektionale Kommunikation zulässt. Bei den Datenübertragungseinrichtungsanschlüssen des Hauptteilnehmers handelt es sich um die Schnittstellen zwischen Hauptteilnehmer und Datenübertragungseinrichtung. Da es sich um ein ringförmiges, redundantes System handelt, umfasst jeder Teilnehmer (Nebenteilnehmer und Hauptteilnehmer) vier Anschlüsse für die Datenübertragungseinrichtung (jeweils 2 Eingänge und 2 Ausgänge). Die Erfindung schafft eine redundantes und fehlersicheres System, weil die Nebenteilnehmer unabhängig vom Hauptteilnehmer unmittelbar miteinander kommunizieren können, wodurch sie diesen entlasten. Unmittelbar benachbarte Nebenteilnehmer kommunizieren somit auf dem kürzesten Weg miteinander, dies reduziert die Laufzeit der Daten. Zusätzlich besteht im Falle einer Funktionsstörung der Datenübertragungseinrichtung für die Nebenteilnehmer trotzdem noch die Möglichkeit mittels des Hauptteilnehmers zu kommunizieren.

In einer nicht beanspruchten Ausgestaltung tauscht der Hauptteilnehmer ausschließlich bei einer Unterbrechung der Datenübertragung zwischen zwei Nebenteilnehmern alle von den Nebenteilnehmern gesendeten Daten nach Maßgabe eines Übertragungstaktes zwischen Nebenteilnehmern aus. Hierbei werden auch Daten von Nebenteilnehmer berücksichtig, welche nicht von der Störung betroffen sind. Das bedeutet, sobald ein Fehler in der Doppelringtopologie vorliegt, beginnt die Hauptstation alle Daten von Nebenstationen, welche am ersten Datenübertragungseinrichtungsanschluss angeschlossen sind auf den zweiten Datenübertragungseinrichtungsanschluss, an dem weitere Nebenstationen angeschlossen sind, zu übertragen und umgekehrt. Damit wird sichergestellt, dass jeder Nebenteilnehmer aus dem Datenstrom die für ihn bestimmten Daten empfangen kann. Im fehlerfreien Betrieb kommunizieren die Nebenteilnehmer effizient unter Umgehung der Hauptstation unmittelbar miteinander. Die Auslastung der Hauptteilnehmer CPU wird somit gering gehalten, wobei trotz des Fehlers eine Kommunikation aufrecht erhalten werden kann.

Erfindungsgemäß tauscht der Hauptteilnehmer ausschließlich Querkommunikationsdaten (von Nebenteilnehmern für Nebenteilnehmer bestimmte Daten) bei einer Störung der Datenübertragungseinrichtung zwischen den Nebenteilnehmern nach Maßgabe eines Übertragungstaktes aus. Es werden nicht alle von den Nebenteilnehmern gesendeten Daten ausgetauscht, die auch Daten für einen Hauptteilnehmer enthalten könnten, sondern nur noch diejenigen Daten, welche tatsächlich auch für andere Nebenteilnehmer bestimmt sind. Daten, welche zwischen Nebenteilnehmer und Hauptteilnehmer auszutauschen sind werden somit nicht für andere Nebenteilnehmer zugänglich gemacht. Das Verfahren wird dadurch effizienter, denn das Datenaufkommen wird in diesem Falle wesentlich verringert.

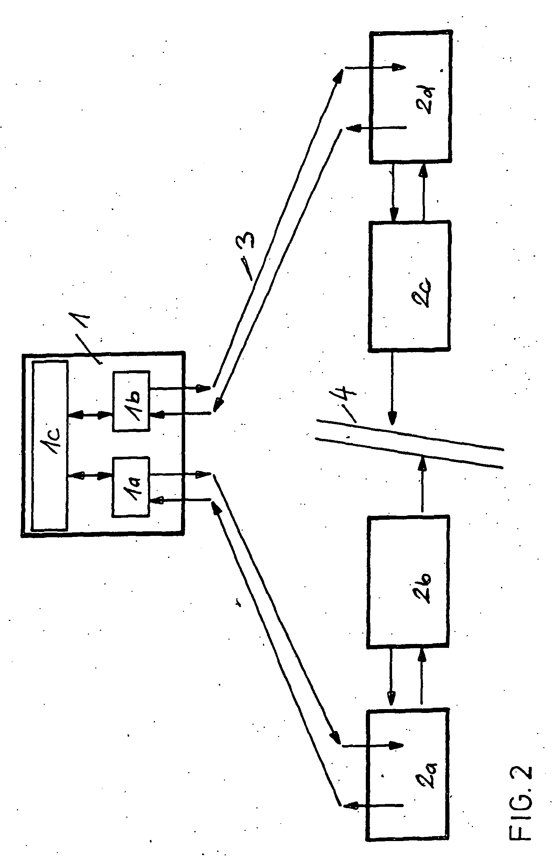

Bevorzugt wird das Verfahren in sofern noch verfeinert, dass ausschließlich diejenigen Nebenteilnehmer, welche von einer Störung unmittelbar betroffen sind, mittels des Hauptteilnehmers kommunizieren, indem insbesondere diese die Störung erkennen und dem Hauptteilnehmer melden. Im Fehlerfalle lokalisiert die Hauptstation die zu kopierenden Daten anhand des nun bekannten Fehlerortes. Die Hauptstation ermittelt demnach nur diejenigen Daten, die von einer noch funktionsfähigen Teillinie zur anderen noch funktionsfähigen Teillinie des Kommunikationsnetzwerkes (siehe Figur 2) ausgetauscht werden müssen. Nur diese Daten werden umkopiert. Daten zwischen Nebenteilnehmern, welche noch unmittelbar miteinander kommunizieren können, sind vom Datenstrom ausgenommen. Lediglich die von der Störung betroffenen Nebenteilnehmerdaten von Nebenteilnehmern, welche nicht mehr unmittelbar zwischen den Nebenteilnehmer übertragen werden können, finden daher ihren Weg über den Hauptteilnehmer. Die Störung wird mittels der Datenübertragungseinrichtung an den Hauptteilnehmer kommuniziert und der Hauptteilnehmer koordiniert anhand der lokalisierten Störung die Kommunikation. Dieses Verfahren erhöht die Effizienz aufgrund der reduzierten Datenlast im Hauptteilnehmer.

Ganz besonders bevorzugt bearbeitet der Hauptteilnehmer die zu einem Nebenteilnehmer weitergeleitete Daten derart, dass diese von unmittelbar zwischen Nebenteilnehmern ausgetauschten Daten unterscheidbar sind, beispielsweise durch Manipulation von Datenfeldern innerhalb der der Datenübertragung zugrunde liegenden Datentelegramme. Auch eine derartige Datenbearbeitung durch den Nebenteilnehmer ist denkbar. Dies ist besonders vorteilhaft, weil aufgrund der mittelbaren Datenübertragung über den Hauptteilnehmer eine Laufzeitverzögerung der Datentelegramme resultieren kann.. Die von dieser Laufzeitverzögerung betroffenen Daten werden mittels des Hauptteilnehmers nun gesondert markiert, sind somit identifizierbar und gegebenenfalls nachträglich bearbeitbar.

Ergänzend zu dem zuvor genannten Verfahrensschritt werden die Daten vorteilhafterweise durch die Nebenteilnehmer und/oder den Hauptteilnehmer einer zusätzlichen Datenbearbeitung unterzogen. Eine derartige Sonderbehandlung der laufzeitverzögerten Daten, beispielsweise mittels einer Extrapolation, ermöglicht gezielte Laufzeitkorrekturen oder beispielsweise eine Mittelwertbildung. Fehlern im System aufgrund fehlerhafter Daten wird somit vorgebeugt, das System wird stabiler und weniger wartungsanfällig.

Vorzugsweise basiert ein leitungsgebundenes Kommunikationsnetzwerk auf dem erfindungsgemäßen Verfahren, wobei dieses auf der Ethernettechnologie oder auf der Lichtwellenleitertechnologie basiert und die Kommunikation auf einer Feldbusnorm basiert. Die Ethernettechnologie ermöglicht eine einfache Handhabung der Verbindungsleitungen, da diese in der Regel auf Kupferleitungen basieren. Ethernet ist erprobt, weniger kostenintensiv und weniger Fehleranfällig. Die Lichtwellenleitertechnologie ist unanfällig gegenüber elektromagnetischer Störungen und erhöht die Datensicherheit. Die Realisierung des Kommunikationsnetzwerkes im Rahmen eines Feldbusnetzwerkes (Profibus, SERCOS, CANopen, etc.) ermöglicht den Zugang zur Automatisierungstechnik. Bei Verwendung einer echtzeitfähigen Kommunikation erschließen sich weitere vorteilhafte Anwendungsfelder, insbesondere bei der Verarbeitung zeitkritischer Daten.

Ganz besonders bevorzugt verwendet ein Antriebssystem, insbesondere für Automatisierungszwecke, ein solches Kommunikationsnetzwerk, wobei dieses als Hauptteilnehmer eine elektrische Steuerung und/oder Antriebsregler und als Nebenteilnehmer elektrische Steuerungen und/oder elektrische Antriebsregler umfasst. Das erfindungsgemäße Konzept erhöht die Verfügbarkeit der vom Automatisierungssystem umfassten Maschinen.

### Bezugszeichenliste:

- 1: Hauptteilnehmer
- 1a: Anschluss (Eingang- und Ausgang) 1
- 1b: Anschluss (Eingang- und Ausgang) 2
- 1c: Datenverarbeitung
- 2a,b,c,d: Nebenteilnehmer
- 3: Verbindungsleitung
- 4: Unterbrechung

Die Erfindung wird anhand der nachfolgend gezeigten konkreten Ausgestaltungsbeispiele näher erläutert. Es zeigen:
Figur 1 ein störungsfrei arbeitendes, redundantes Kommunikationsnetzwerk.
Figur 2 ein störungsbehaftetes, redundantes Kommunikationsnetzwerk.

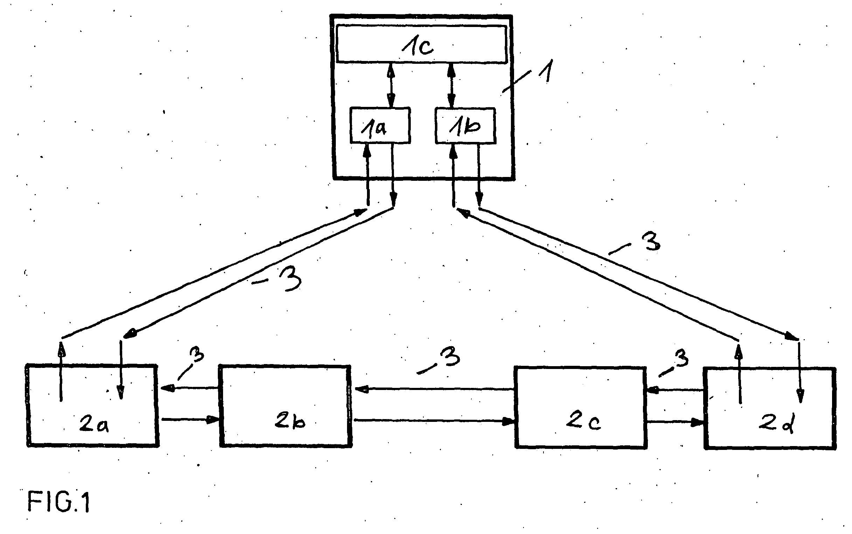

Das in Figur 1 gezeigte Kommunikationsnetzwerk umfasst einen Hauptteilnehmer 1 mit einer Datenverarbeitungseinrichtung 1c, und zwei Netzwerkanschlüssen 1a und 1b sowie Nebenteilnehmer 2a, b, c, d, welche mittels der bidirektionalen Verbindungsleitung 3 miteinander verbunden sind. Die bidirektionalen Verbindungsleitung 3 ermöglicht einen unmittelbaren und bidirektionalen Datenaustausch zwischen den einzelnen Nebenteilnehmern 2a, b, c, d und dem Hauptteilnehmer 1. Zusätzlich zu der bidirektionalen Verbindungsleitung 3 in Form eines gegenläufigen Ringes wird Redundanz dadurch geschaffen, dass Nebenteilnehmer 2a, b, c, d auch mittels des Hauptteilnehmers 1 miteinander kommunizieren können, indem der Hauptteilnehmer am Eingang seines Anschlusses 1a (Eingang/Ausgang) ankommende Daten mittels der Datenverarbeitung 1c auf den Ausgang des Anschlusses 1b (Eingang/Ausgang) weiterleitet. Somit besteht beispielsweise für den Nebenteilnehmer 2b entweder die Möglichkeit unmittelbar mit dem Nebenteilnehmer 2c mittel der bidirektionalen Verbindung 3 oder mittelbar mittels des Hauptteilnehmers 1 zu kommunizieren.

Gemäß Figur 2 kann im Falle einer Leitungsunterbrechung 4 beispielsweise zwischen den Nebenteilnehmern 2b und 2c die Erfindung dazu genutzt werden, den Datenverkehr zwischen den Nebenteilnehmern 2b und 2c über den Hauptteilnehmer 1 aufrecht zu erhalten. Gemäß Figur 2 zerfällt das ringförmige Kommunikationsnetzwerk in eine linienförmige Topologie, wobei der Hauptteilnehmer 1 zusammen mit den Nebenteilnehmern 2a und 2b eine erste Teillinie und der Hauptteilnehmer 1 zusammen mit den Nebenteilnehmern 2c und 2d eine zweite Teillinie bildet. Der Nebenteilnehmer 2a könnte nun ebenso wie der Nebenteilnehmer 2b mittels der weiter oben geschilderten Datenweiterleitungsfunktion des Hauptteilnehmers 1 mit dem Nebenteilnehmer 2c und/oder 2d kommunizieren. Lediglich im Fehlerfalle wird somit der Umweg über den Hauptteilnehmer 1 gewählt, wobei trotz des Fehlers eine Kommunikation aufrecht erhalten bleibt. Der Hauptteilnehmer 1 tauscht damit ausschließlich Querkommunikationsdaten (Nutzdaten, welche ausschließlich zwischen Nebenteilnehmern ausgetauscht werden und keine Daten für den Hauptteilnehmer als solchen umfassen) bei einer Leitungsunterbrechung zwischen den Nebenteilnehmern nach Maßgabe eines Übertragungstaktes aus und konzentriert sich dabei lediglich auf die zur Querkommunikation zwischen den Nebenteilnehmern erforderlichen Daten, wodurch das Verfahren effizienter wird, weil das Datenaufkommen in diesem Falle wesentlich geringer ist.

Das Kommunikationsnetzwerk könnte auch so konzipiert sein, dass ausschließlich diejenigen Nebenteilnehmer 2b, 2c, welche von der Leitungsunterbrechung 4 unmittelbar betroffen sind, mittels des Hauptteilnehmers 1 kommunizieren, indem ein Nebenteilnehmer 2b, 2c eine physikalisch bedingte Unterbrechung 4 im Kommunikationsnetzwerk erkennt und diese Unterbrechung dem Hauptteilnehmer 1 mittels der noch funktionsfähigen Teillinie, an der er angeschlossen ist, meldet. Bei dieser Konfiguration würden die Nebenteilnehmer 2a und 2b bzw. 2c und 2d nach wie vor wie im fehlerfreien Fall unmittelbar miteinander kommunizieren. Die Daten zwischen diesen Nebenteilnehmern sind somit von dem Datenstrom ausgenommen, der über den Hauptteilnehmer 1 läuft. Dies reduziert die vom Hauptteilnehmer zu verarbeitende Datenmenge und erhöht die Effizienz des Netzwerkes zusätzlich.

Der Hauptteilhehmer 1 kann im Falle der Weiterleitung an Nebenteilnehmer 2a,b,c,d Daten derart bearbeiten, dass diese von unmittelbar zwischen Nebenteilnehmern ausgetauschten Daten unterscheidbar sind. Die Nebenteilnehmer 2a,b,c,d sind dann in der Lage gegebenenfalls einer Datennachbearbeitung zu unterziehen, um beispielsweise Laufzeitfehler zu korrigieren. Die Hauptstation 1 kennt in diesem Falle den Fehlerort und ist darüber informiert welche Nebenstationen nicht mehr direkt miteinander kommunizieren können.

Auch im fehlerfreien Falle könnte die Hauptstation 1 die Querkommunikationsdaten von einem Abschluss 1a zum anderen Anschluss 1b und umgekehrt kopieren, so dass beide Datenpfade, d.h. die unmittelbare Kommunikation zwischen den Nebenteilnehmern und die mittelbare Kommunikation über den Hauptteilnehmer zur Verfügung steht. Die im Hauptteilnehmer 1 und den Nebenteilnehmern 2a, b, c, d zur Verfügung stehende Rechenleistung kann somit anwendungsspezifisch genutzt werden.

Die bidirektionalen Verbindungsleitungen 3 basieren vorzugsweise auf der Ethernettechnologie (Kupferleitungen) oder auf der Lichtwellenleitertechnologie. Die Verwendung von im Rahmen der gängigen Feldbusnormen üblichen Protokolle (Profibus, SERCOS I, II, III) ermöglicht den Zugang zur Welt der Automatisierungstechnik, so dass als Hauptteilnehmer 1 beispielsweise eine elektrische Steuerung und als Nebenteilnehmer 2a, 2b, 2c, 2d elektrische Steuerungen und/oder elektrische Antriebsregler umfasst sein können. Das erfindungsgemäße Konzept erhöht die Verfügbarkeit der Maschinen, welche mittels des Antriebssystems realisiert sind.

Die mittels Steuerungen realisierten Nebenteilnehmer stellen so genannte Unterstationen und der Hauptteilnehmer eine so genannte Kopfstation dar. An jeder Unterstation können Antriebsregler in Ring- oder Linienform angeschlossen sein. Auch an der Kopfstation selbst ist das möglich, wobei diese jedoch bevorzugt zentrale Aufgaben übernimmt. Die in den Figuren 1 und 2 gezeigte Kopfstation erfüllt ausschließlich übergeordnete, dezentrale Steueraufgaben, während die Unterstationen zentrale Steueraufgaben erledigen.

## Patentansprüche

1. Verfahren zum Betreiben eines redundanten, ringförmigen, gegenläufig kommunizierenden, Kommunikationsnetzwerkes mit zumindest einem Hauptteilnehmer (1) und zumindest zwei Nebenteilnehmern (2a,b,c,d), welche mittels einer Datenübertragungseinrichtung (3) miteinander kommunizieren, wobei die Datenübertragung auf einer Feldbusnorm basiert, wobei die Nebenteilnehmer (2a,b,c,d) unmittelbar mittels der Datenübertragungseinrichtung (3) miteinander kommunizieren und/oder mittelbar mittels des Hauptteilnehmers (1) und der Datenübertragungseinrichtung (3) miteinander kommunizieren, indem der Hauptteilnehmer (1) die zwischen den Nebenteilnehmern (2a,b,c,d) auszutauschenden Daten zwischen seinen Datenübertragungseinrichtungsanschlüssen (1a, 1b) nach Maßgabe eines Übertragungstaktes austauscht,
wobei der Hauptteilnehmer (1) ausschließlich von Nebenteilnehmern (2a, b, c, d) für Nebenteilnehmer (2a, b, c, d) bestimmte Daten bei einer Störung der Datenübertragung (4) zwischen Nebenteilnehmern (2a, b, c, d) austauscht.

2. Verfahren nach Anspruch 1, wobei ausschließlich diejenigen Nebenteilnehmer (2b, c), welche aufgrund der Störung (4) unmittelbar untereinander nicht mehr kommunizieren können, mittels des Hauptteilnehmers (1) kommunizieren, wobei die Störung (4) mittels der Nebenteilnehmer (2b, c) erkannt und/oder lokalisiert wird.

3. Verfahren nach Anspruch 2, wobei die Störung mittels der Datenübertragungseinrichtung (3) an den Hauptteilnehmer (1) kommuniziert wird und der Hauptteilnehmer (1) anhand der lokalisierten Störung (4) die Kommunikation koordiniert.

4. Verfahren nach Anspruch 3, wobei die mittels des Hauptteilnehmers (1) weitergeleiteten Daten mittels der Nebenteilnehmer (2a, b, c, d) und/oder des Hauptteilnehmers (1) einer zusätzlichen Datenbearbeitung unterzogen werden.

5. Verfahren nach einem der vorstehenden Ansprüche, wobei der Hauptteilnehmer (1) die ausgetauschten Daten derart bearbeitet, dass sie von unmittelbar zwischen Nebenteilnehmern (2a, b, c, d) ausgetauschten Daten unterscheidbar sind.

6. Kommunikationsnetzwerk bestehend aus Mittel zur Durchführung der einzelnen Schritte des Verfahrens nach einem der vorherigen Ansprüche, wobei dieses auf der Ethernettechnologie oder auf der Lichtwellenleitertechnologie basiert, wobei die Datenübertragung insbesondere auf einer Feldbusnorm basiert.

7. Antriebssystem, für Automatisierungszwecke, mit einem Kommunikationsnetzwerk nach Anspruch 6, wobei dieses als Hauptteilnehmer (1) eine elektrische Steuerung und/oder elektrische Antriebsregler und als Nebenteilnehmer (2a,b,c,d) elektrische Steuerungen und/oder elektrische Antriebsregler umfasst.

## Claims

1. Method for operating a redundant, ring-shaped communication network communicating in opposite directions and having at least one main subscriber (1) and at least two secondary subscribers (2a, b, c, d) that communicate with one another by means of a data transmission device (3), wherein the data transmission is based on a field bus standard, wherein the secondary subscribers (2a, b, c, d) communicate with one another directly by means of the data transmission device (3) and/or communicate with one another indirectly by means of the main subscriber (1) and the data transmission device (3) by virtue of the main subscriber (1) interchanging the data that need to be interchanged between the secondary subscribers (2a, b, c, d) between its data transmission device ports (1a, 1b) on the basis of a transmission clock,
wherein the main subscriber (1) interchanges exclusively data intended for secondary subscribers (2a, b, c, d) by secondary subscribers (2a, b, c, d) in the event of a fault in the data transmission (4) between secondary subscribers (2a, b, c, d).

2. Method according to Claim 1, wherein exclusively those secondary subscribers (2b, c) that are no longer able to communicate directly with one another on account of the fault (4) communicate by means of the main subscriber (1), the fault (4) being recognized and/or localized by means of the secondary subscribers (2b, c).

3. Method according to Claim 2, wherein the fault is communicated to the main subscriber (1) by means of the data transmission device (3), and the main subscriber (1) coordinates the communication using the localized fault (4).

4. Method according to Claim 3, wherein the data forwarded by means of the main subscriber (1) are subjected to additional data editing by means of the secondary subscribers (2a, b, c, d) and/or the main subscriber (1).

5. Method according to one of the preceding claims, wherein the main subscriber (1) edits the interchanged data such that they can be distinguished from data interchanged directly between secondary subscribers (2a, b, c, d).

6. Communication network comprising means for performing the individual steps of the method according to one of the preceding claims, wherein said communication network is based on Ethernet technology or on fibre optic technology, the data transmission being based particularly on a field bus standard.

7. Drive system, for automation purposes, having a communication network according to Claim 6, wherein said drive system comprises an electrical controller and/or electrical drive controller as a main subscriber (1) and electrical controllers and/or electrical drive controllers as secondary subscribers (2a, b, c, d).

## Revendications

1. Procédé pour faire fonctionner un réseau de communication redondant, en forme d'anneau, communiquant en sens inverse, comprenant au moins un abonné principal (1) et au moins deux abonnés secondaires (2a, b, c, d) qui communiquent entre eux par l'intermédiaire d'un dispositif de transmission de données (3), la transmission de données se basant sur une norme de bus de terrain, les abonnés secondaires (2a, b, c, d) communiquant entre eux directement par l'intermédiaire du dispositif de transmission de données (3) et/ou communiquant entre eux indirectement par l'intermédiaire de l'abonné principal (1) et du dispositif de transmission de données (3), en ce que l'abonné principal (1) échange les données à échanger entre les abonnés secondaires (2a, b, c, d) entre ses bornes de dispositif de transmission de données (1a, 1b) conformément à une cadence de transmission,
l'abonné principal (1) échangeant exclusivement des données déterminées par des abonnés secondaires (2a, b, c, d) pour des abonnés secondaires (2a, b, c, d) en cas de panne de la transmission de données (4) entre les abonnés secondaires (2a, b, c, d).

2. Procédé selon la revendication 1, selon lequel seuls communiquent par l'intermédiaire de l'abonné principal (1) les abonnés secondaires (2b, c) qui ne peuvent plus communiquer directement entre eux en raison de la panne (4), la panne (4) étant détectée et/ou localisée par l'intermédiaire des abonnés secondaires (2b, c).

3. Procédé selon la revendication 2, selon lequel la panne est communiquée à l'abonné principal (1) par l'intermédiaire du dispositif de transmission de données (3) et l'abonné principal (1) coordonne la communication à l'aide de la panne (4) localisée.

4. Procédé selon la revendication 3, selon lequel les données retransmises par l'intermédiaire de l'abonné principal (1) sont soumises à un traitement de données supplémentaire par l'intermédiaire des abonnés secondaires (2a, b, c, d) et/ou de l'abonné principal (1).

5. Procédé selon l'une des revendications précédentes, selon lequel l'abonné principal (1) traite les données échangées de telle sorte qu'elles puissent être différenciées des données échangées directement entre les abonnés secondaires (2a, b, c, d).

6. Réseau de communication composé de moyens pour exécuter les étapes individuelles du procédé selon l'une des revendications précédentes, celui-ci étant basé sur la technologie Ethernet ou sur la technologie des fibres optiques, la transmission de données se basant notamment sur une norme de bus de terrain.

7. Système d'entraînement pour des applications d'automatisation, comprenant un réseau de communication selon la revendication 6, celui-ci incluant en tant qu'abonné principal (1) une commande électrique et/ou un régulateur d'entraînement électrique et en tant qu'abonnés secondaires (2a, b, c, d) des commandes électriques et/ou des régulateurs d'entraînement électriques.
